**Europäisches Patentamt**

**European Patent Office**

**Office européen des brevets**

(19)

(11) Veröffentlichungsnummer : **0 397 768 B1**

## (12) EUROPÄISCHE PATENTSCHRIFT

(45) Veröffentlichungstag der Patentschrift :
**06.05.92 Patentblatt 92/19**

(51) Int. Cl.$^5$ : **F02B 37/00**

(21) Anmeldenummer : **89902240.4**

(22) Anmeldetag : **25.01.89**

(86) Internationale Anmeldenummer :
**PCT/EP89/00035**

(87) Internationale Veröffentlichungsnummer :
**WO 89/07194 10.08.89 Gazette 89/18**

(54) **TURBINE EINES ABGASTURBOLADERS.**

(30) Priorität : **02.02.88 DE 3803010**

(43) Veröffentlichungstag der Anmeldung :
**22.11.90 Patentblatt 90/47**

(45) Bekanntmachung des Hinweises auf die
Patenterteilung :
**06.05.92 Patentblatt 92/19**

(84) Benannte Vertragsstaaten :
**DE FR GB**

(56) Entgegenhaltungen :
**EP-A- 0 078 637**
**DE-A- 3 025 137**
**JP-A-55 101 728**
**US-A- 4 630 446**

(73) Patentinhaber : **AUDI AG**
**Auto-Union-Strasse 1 Postfach 220**
**W-8070 Ingolstadt (DE)**

(72) Erfinder : **BARETZKY, Ulrich**
**Halterstrasse 36**
**W-8000 München 45 (DE)**

(74) Vertreter : **Speidel, Eberhardt**
**Postfach 1320 Waldpromenade 26**
**W-8035 Gauting (DE)**

EP 0 397 768 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung bezieht sich auf die Turbine eines Abgasturboladers gemäß dem Oberbegriff des Anspruchs 1.

Ein derartiger Turbolader ist beispielsweise in der Zeitschrift MTZ 48 (1987) Heft 10, Seite 400 beschrieben. Bei diesem bekannten Turbolader erstreckt sich der einen Teil der Bypaß-Leitung bildende Kanal konzentrisch um den Turbinenauslaß herum und er mündet in die Flanschfläche des Turbinengehäuses, an welche die Auspuffleitung angeflanscht wird. Sein Ringquerschnitt ist durch einen eingelegten Ring düsenförmig verengt, um eine Injektorwirkung hervorzurufen, durch welche die Grenzschicht des den Turbinenauslaß durchströmenden Abgasstromes beschleunigt und der Druck hinter der Turbine abgesenkt wird. Dies hat zur Folge, daß auch der Druck vor der Turbine abgesenkt und die Ausschiebearbeit der Brennkraftmaschine verringert werden kann.

Um auf diese Weise einen möglichst großen Teil der kinetischen Energie des Bypaß-Stromes auszunutzen, sollten die Bypaß-Gase möglichst nahe des Turbinenlaufrades in den Turbinenauslaß eingeführt werden. Andererseits kann hierdurch der Ausströmvorgang aus der Turbine gestört und der beabsichtigte Nutzeffekt zum Teil wieder zunichte gemacht werden. Bei der bekannten Anordnung erfolgt die Einführung der Bypaß-Gase in die aus dem Turbinenauslaß ausströmenden Abgase axial in Richtung der Strömung dieser Abgase und in einem verhältnismäßig großen Abstand vom Turbinenlaufrad, so daß eine Störung des Ausströmvorganges nicht zu erwarten ist. Allerdings wird aufgrund dieses verhältnismäßig großen Abstandes nur ein relativ kleiner Teil der kinetischen Energie des Bypaß-Stromes ausgenutzt.

Aus der JP-A-55 101728 ist eine Abgasturbine mit einem Bypaßkanal bekannt, der in einen Ringspalt endet, welcher sich mit gleichbleibendem Querschnitt um den Turbinenauslaß erstreckt. Auf der Wand des Turbinenauslasses sind Leitflächen angeordnet, welche den Bypaßgasen eine Strömungsrichtung aufzwingen. Durch ein Leitblech im Bypaßkanal soll erreicht werden, daß die Bypaßgase in einer bestimmten Umfangsrichtung durch den Ringspalt strömen, damit die Leitflächen zur Wirkung kommen können. Da sich das Leitblech nicht bis zur Wand des Turbinenauslasses erstreckt, ist zu erwarten, daß ein Teil der Bypaßgase im Kreislauf um den Turbinenauslaß herumströmt oder sich Gegenströmungen bilden, welche eine gerichtete Strömung der Bypaßgase in den Turbinenauslaß behindern. Die kinetische Energie der Bypaßgase kann daher nur zu einem relativ geringen Teil zur Reduzierung des Druckes hinter der Turbine ausgenutzt werden.

Der Erfindung liegt die Aufgabe zugrunde, eine Turbine eines Abgasturboladers gemäß dem Oberbegriff des Anspruchs 1 zu schaffen, bei der ein hoher Anteil der kinetischen Energie der Bypaßgase zur Reduzierung des Abgas-Gegendruckes hinter der Turbine ausgenutzt werden kann.

Diese Aufgabe wird erfindungsgemäß durch die im Kennzeichen des Anspruchs 1 angegebenen Merkmale gelöst.

Durch die Ausbildung des Bypaß-Kanals in Form eines Spiralkanals ähnlich dem Turbinen-Spiralkanal und durch die vorgeschlagene Ausbildung und Anordnung der Ausströmöffnungen werden Strömungsverhältnisse für die Bypaßgase geschaffen, die ähnlich den Strömungsverhältnissen der das Turbinenlaufrad beaufschlagenden Abgase sind, so daß ein sehr hoher Anteil der kinetischen Energie der Bypaßgase zur Verringerung des Abgas-Gegendrucks hinter der Turbine ausgenutzt werden kann.Durch die Spiralform des Bypaßkanals wird erreicht, daß an jeder der in Umfangsrichtung aufeinander folgenden Austrittsöffnungen im wesentlichen der gleiche Druck herrscht.

Zur Erzielung der gewünschten Strömungsverteilung kann es zweckmäßig sein, den Querschnitt der Austrittsöffnungen umso kleiner auszuführen, je größer ihr Abstand vom Einströmende des Bypaßkanals ist.

Der Turbinenauslaß sollte sich im Bereich der Mündung der Austrittsöffnungen vorzugsweise trichterförmig erweitern, um zu vermeiden, daß durch die eingeführten Bypaßgase ein Gegendruck entsteht.

Der Turbinen-Spiralkanal und der Bypaß-Spiralkanal sind vorzugsweise in parallelen Ebenen im Turbinengehäuse angeordnet, wobei zwischen den benachbarten Wänden dieser beiden Kanäle ein Ringspalt vorgesehen ist um den Wärmeaustausch zwischen den beiden Kanälen zu verringern.

Ein Ausführungsbeispiel der Erfindung wird im folgenden unter Bezugnahme auf die Zeichnungen beschrieben. Es zeigt:

Fig. 1 eine Ansicht einer Turbine eines Abgasturboladers, teilweise geschnitten,

Fig. 2 einen Schnitt entlang Linie A-A in Fig. 1, und

Fig. 3 einen Schnitt etwa entlang Linie B-B in Fig. 1, wobei das Abblaseventil weggelassen ist.

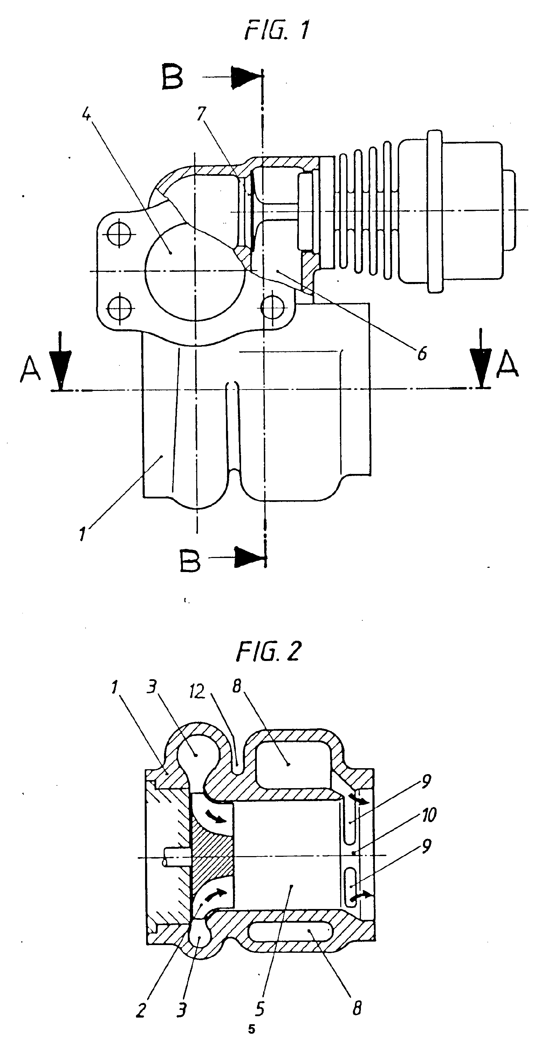

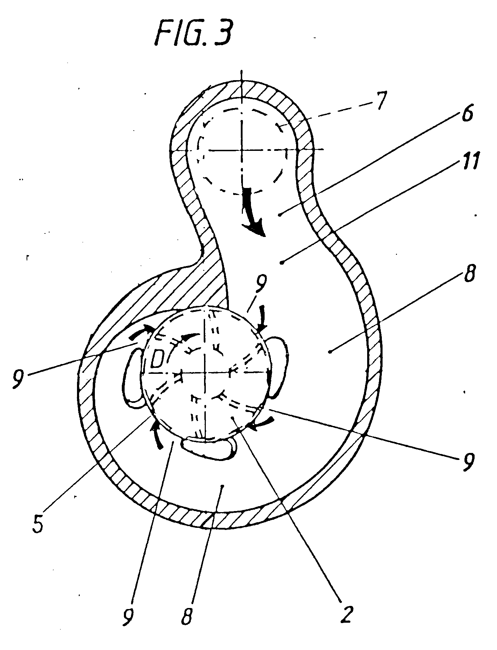

In den Zeichnungen ist mit 1 das Turbinengehäuse bezeichnet, in welchem ein Turbinenrad 2 umläuft und das einen Turbinen-Spiralkanal 3 aufweist, in den ein Turbineneinlaß 4 einmündet und von dem ein Turbinenauslaß 5 ausgeht. Zur Beeinflussung der Beaufschlagung des Turbinenlaufrades 2 ist zwischen dem Turbineneinlaß 4 und dem Turbinenauslaß 5 eine Bypaß-Leitung 6 vorgesehen, die von einem Abblaseventil 7 (Fig. 1) beherrscht ist. Die BypaßLeitung 6 weist einen spiralförmigen, den Turbinenauslaß 5 weitgehend umgebenden Bypaß-Kanal 8 auf, von welchem Austrittsöffnungen 9 ausgehen, die, wie aus Fig. 2 ersichtlich, axial in Richtung der den Turbinenauslaß 5 durchströmenden Abgase sowie, wie aus Fig. 3 ersichtlich, tangential in Bezug auf die Drehrichtung D des Turbinenlaufrades 2 in den Turbinenauslaß 5 münden. Durch diese Orientierung der in den Turbinenauslaß 5 eintretenden Bypaß-Gase wird eine schraubenlinienförmige Strömung derselben entlang der Wand des Turbinenauslasses 5 erzeugt, welche den Ausströmvorgang aus der Turbine unterstützt, da sie gleichsinnig mit der Strömung der das Turbinenrad 2 verlassenden Abgase verläuft. Diese Wirkung ist deswegen besonders ausgeprägt, weil die Bypaß-Gase in geringem Abstand von dem Turbinenlaufrad 2 in den Turbinenauslaß 5 eingeführt werden.

Unterstützt wird diese Wirkung noch durch die insbesondere aus Fig. 2 ersichtliche düsenartige Verengung der Austrittsöffnungen 9.

Um zu vermeiden, daß durch das Einführen der Bypaß-Gase in den Turbinenauslaß 5 ein Gegendruck entsteht, ist der Turbinenauslaß 5 im Bereich 10 der Austrittsöffnungen 9 trichterförmig erweitert, wie aus Fig. 2 ersichtlich ist.

Der Bypaß-Kanal 8 ist spiralförmig ausgebildet und hat somit einen sich von seinem Einströmende 11 fortschreitend veringernden Querschnitt, um zu erreichen, daß an jeder der in Umfangsrichtung aufeinander folgenden Austrittsöffnungen 9 im wesentlichen der gleiche Druck herrscht. Bei einem im wesentlichen gleichbleibenden Querschnitt des Bypaß-Kanals 8 sollte der Querschnitt der Austrittsöffnungen 9 um so kleiner ausgeführt werden, je größer ihr Abstand vom Einströmende des Kanals ist, um die gleiche Wirkung zu erzielen.

Der Turbinen-Spiralkanal 3 und der Bypaß-Spiralkanal 8 sind in im wesentlichen zueinander parallelen Ebenen im Turbinengehäuse 1 angeordnet. Dadurch und durch den rechteckigen Querschnitt des Bypaß-Kanals 8 ergibt sich ein besonders raumsparender Aufbau. Um den Wärmeaustausch zwischen diesen beiden Kanälen klein zu halten, kann zwischen diesen ein in Fig. 2 sichtbarer Ringspalt 12 vorgesehen werden.

**Patentansprüche**

1. Turbine eines Abgasturboladers, mit einer vom Turbineneinlaß (4) zum Turbinenauslaß (5) führenden, von einem Abblaseventil (7) beherrschten Bypaß-Leitung (6), die einen den Turbinenauslaß (5) zumindest teilweise umgebenden Bypaß-Kanal (8) aufweist, der mit dem Turbinenauslaß (5) in Verbindung steht, **dadurch gekennzeichnet**, daß der Bypaß-Kanal (8) als Spiralkanal mit einem sich von seinem Einströmende fortschreitend verringernden Querschnitt ausgebildet ist und daß mehrere von dem Bypaß-Kanal (8) ausgehende Austrittsöffnungen (9) in Umfangsrichtung des Turbinenauslasses (5) hintereinander angeordnet sind, die axial in Richtung der den Turbinenauslaß durchströmenden Abgase sowie tangential in Bezug auf die Drehrichtung (D) des Turbinenlaufrades (2) in den Turbinenauslaß münden und sich zum Turbinenauslaß hin düsenartig verengen.

2. Turbine nach Anspruch 1, dadurch gekennzeichnet, daß der Querschnitt der Austrittsöffnungen (9) umso kleiner ist, je größer ihr Abstand vom Eintrittsende (11) des Bypaß-Kanals (8) ist.

3. Turbine nach Anspruch 1 oder 2, dadurch gekennzeichnet, daß der Turbinenauslaß (5) im Bereich (10) der Mündung der Austrittsöffnungen (9) trichterförmig erweitert ist.

4. Turbine nach Anspruch 1, dadurch gekennzeichnet, daß der Turbinen-Spiralkanal (3) und der Bypaß-Spiralkanal (8) in parallelen Ebenen im Turbinengehäuse (1) angeordnet sind und daß zwischen den benachbarten Wänden des Turbinen-Spiralkanals und des Bypaß-Spiralkanals ein Ringspalt (12) vorgesehen ist.

**Claims**

1. Turbine of an exhaust gas turbocharger, with a by-pass duct (6) leading from the turbine inlet (4) to the turbine outlet (5) and controlled by a blow-off valve (7), and having a by-pass passage (8) which at least partially surrounds the turbine outlet (5) and is in communication with the turbine inlet (5), characterized in that the by-pass passage (8) is configured as a spiral duct with a cross section diminishing progressively from its inflow end, and that a pluralitiy of discharge openings (9) exiting from the by-pass (8) are arranged one behind the other in the circumferential direction of the turbine outlet (5) and open into the turbine outlet (5) axially in the direction of the exhaust gases flowing through the turbine outlet (5) as well as tangentially with respect to the direction of rotation (D) of the turbine rotor (2), and which narrow nozzle-like toward the turbine outlet.

2. Turbine according to claim 1, characterized in that the cross section of the discharge openings (9) is smaller the greater their distance is from the entry end (11) of the by-pass passage (8).

3. Turbine according to claim 1 or 2, characterized in that the turbine outlet (5) is flared in the area (10) of the mouth of the discharge openings (9).

4. Turbine according to claim 1, characterized in that the turbine spiral duct (3) and the by-pass spiral duct (8) are arranged in parallel planes in the turbine casing (1), and that between the adjacent walls of the turbine spiral duct and the by-pass spiral duct an annular gap (12) is provided.

## Revendications

1. Turbine pour turbocompresseur à gaz d'échappement, comprenant une conduite de dérivation (6) conduisant de l'admission de turbine (4) à la sortie de turbine (5) et commandée par une soupape d'évacuation (7), qui présente un canal de dérivation (8) lequel enveloppe au moins partiellement la sortie de turbine (5) et communique avec la sortie de turbine (5), **caractérisée en ce** que le canal de dérivation (8) est conformé en canal hélicoïdal avec une section transversale qui se rétrécit progressivement à partir de son extrémité d'admission; et que plusieurs orifices de sortie (9) partant du canal de dérivation (8) sont disposés les uns derrière les autres dans le sens circonférentiel de la sortie de turbine (5) et débouchent, axialement dans la direction des gaz d'échappement passant par la sortie de turbine ainsi que tangentiellement par rapport au sens de rotation (D) de la roue motrice (2) de la turbine, dans la sortie de turbine et se rétrécissent à la manière de tuyères en direction de la sortie de turbine.

2. Turbine selon la revendication 1, caractérisée en ce que la section transversale des orifices de sortie (9) est d'autant plus petite que leur distance par rapport à l'extrémité d'admission (11) du canal de dérivation (8) est plus grande.

3. Turbine selon l'une des revendications 1 ou 2, caractérisée en ce que la sortie de turbine (5) s'élargit en forme d'entonnoir dans la région (10) de la bouche des orifices de sortie (9).

4. Turbine selon la revendication 1, caractérisée en ce que le canal de turbine hélicoïdal (3) et le canal de dérivation hélicoïdal (8) sont disposés dans des plans parallèles à l'intérieur de la carcasse de turbine (1), et qu'une fente annulaire (12) est prévue entre les parois voisines du canal de turbine hélicoïdal et du canal de dérivation hélicoïdal.

FIG. 1

FIG. 2

## FIG. 3